Europäisches Patentamt

European Patent Office

Office européen des brevets

(19)

(11) Publication number: **0 041 841**
**B1**

(12) **EUROPEAN PATENT SPECIFICATION**

(45) Date of publication of patent specification: **26.09.84**

(21) Application number: **81302495.7**

(22) Date of filing: **05.06.81**

(51) Int. Cl.³: **C 22 B 1/00, C 22 B 4/00**

(54) **Process for the recovery of metals from their ores.**

(30) Priority: **11.06.80 US 158448**
**11.06.80 US 158449**

(43) Date of publication of application:
**16.12.81 Bulletin 81/50**

(45) Publication of the grant of the patent:
**26.09.84 Bulletin 84/39**

(84) Designated Contracting States:
**BE DE FR GB IT NL**

(56) References cited:
**DE-C- 891 231**
**US-A-2 177 070**
**US-A-4 234 402**

**Patents Abstracts of Japan Vol. 4, No. 119, 23
August 1980, page 143C22
ELEKTROTECHNIK UND MASCHINENBAU,
Vol. 93, No. 9, September 1976, Wien E. BONEK
"Industrielle Anwendungen von Mikrowellen"**

(73) Proprietor: **CATO RESEARCH CORPORATION
Wheat Ridge Colorado (US)**

(72) Inventor: **Kruesi, Paul R.
13950 Crabapple Road
Golden, Colorado 80401 (US)**
Inventor: **Frahm, Veryl H.
380 South 36th Street
Boulder, Colorado 80303 (US)**

(74) Representative: **Hind, Raymond Stenton et al
c/o MATHISEN, MACARA & Co. European
Patent Attorneys Lyon House Lyon Road
Harrow Middlesex HA1 2ET (GB)**

Courier Press, Leamington Spa, England.

## Description

The present invention relates to a process for the recovery of a metal selected from copper, molybdenum and rhenium from a metal ore.

Recovery of metals from low-grade ore deposits can be very expensive due to the large amounts of rock which must be mined transported and treated. Conventional recovery processes may not be economically viable in these cases. For example an established method of recovering metal values from such low grade deposits has involved mining the deposits and then grinding the ore to a fine size to permit floating the liberated minerals. The grinding also produces some very fine particles of the ore which are too fine to be recoverable by flotation. This is particularly true in the case of very soft ores such as molybdenite.

Certain ores, such as oxides or silicates of copper are not amenable to flotation, and so the ore is often leached with acids to recover the copper. However, such acid leaching is not effective in recovering highly insoluble copper sulfide which may also be present and is in general susceptible to only a very poor recovery of the copper. The concentrates obtained from flotation steps may require further treatment for example by smelting or roasting to obtain the metal values and these are problems associated with these treatments.

For example molybdenite once recovered is converted to molybdenum oxide by roasting it in the presence of oxygen which may be supplied by air. In the course of the roasting a great deal of heat is generated because of the exothermic reactions producing molybdenum trioxide and sulfur dioxide. Additional or excess air over that required for oxidation is frequently used during the roasting to cool the burning mass to prevent it from becoming so that it fuses, or that the molybdenum oxide volatilizes.

During the roasting of molybdenite, rhenium which may be present with the molybdenum is oxidized and at the temperature of roasting becomes volatile. Given the large volumes of gases emitted by burning organic feeds to initiate the roasting, the large volumes of sulfur dioxide from the roasting and the large volumes of air needed to cool the reaction, the recovery of this valuable rhenium is difficult and expensive.

In roasting of molybdenite, the molybdenum oxide being formed tends to coat the as yet unreacted molybdenite and form an insulating layer which inhibits further reaction. As the heat and oxygen necessary to reaction must pass through this layer, it is difficult to obtain a complete roasting of the molybdenite.

Various processes in which metal compounds contained in ores are converted to other more readily recoverable compounds have been proposed.

It is an object of the invention to provide a process for the economical recovery of metals from host materials such as low grade ore deposits.

According to the invention, there is provided a process for the recovery of a metal selected from copper, molybdenum and rhenium from a metal ore in which the metal is present in the form of a first compound and the remainder of the ore is less absorbent to microwaves than said first compound, said process comprising subjecting the ore to microwave energy under conditions in which the first compound can be converted to the metal or to a second compound which is more readily recoverable from the ore.

By the use of microwaves, one can selectively heat the metal values for example copper (whether oxidic or sulfidic) or sulfidic molybdenum or rhenium without the necessity of heating the whole rock mass, because the gangue is substantially transparent to microwave radiation while the aforementioned metal values are very effective in absorbing the microwaves.

Microwave energy is used in processes requiring heat to recover for example copper from its oxidic or sulfidic ore and to recover molybdenum and rhenium from their sulfidic ore. The microwave energy is used in processes known to the art in place of conventional heat sources thereby causing very rapid chemical reactions with substantial energy savings. Because the microwaves heat and activate primarily the metal component of the ore and not the gangue, they are useful for treating lower grades of ore than could be ordinarily economically treated.

The effects of microwaves on metal values contained with ores does not appear to be related in any predictable way to the chemical or physical properties of such metal values. For example, it has been found that copper in its oxide, sulfide or silicate forms is very susceptible to heating by microwaves of 915 megahertz or 2450 megahertz, whereas zinc oxide or sulfide does not respond, or responds only slightly. Likewise, it has been found that the sulfides of molybdenum and rhenium absorb microwaves, but the oxides of iron and chromium do not absorb microwaves.

Therefore the process can be applied to copper ores in the form of sulfides such as chalcopyrite, bornite, chalcocite and covellite, or oxides such as cuprite or tenorite, the hydroxy carbonates such as malachite or azurite, or as the silicates such as chrysocolla or to molybdenum ores containing molybdenum disulfide or molybdenite.

In the treating of copper sulfide ores or concentrates, the ore or concentrate may be heated by microwaves in the presence of oxygen either as a pure gas or diluted as in air. The microwaves may be applied to heat the copper sulfides sufficiently in the presence of oxygen to convert them to sulfates, or to heat the sulfides sufficiently to produce the oxide and sulfur dioxide. Heating to produce the sulfate is preferred as requiring less energy.

The copper, now as a water soluble sulfate or acid soluble oxide, can be leached and recovered. As an example, it might be recovered from the water leach by solvent extraction and then stripped with sulphuric acid, and electrowon. The use of organic solvents to extract copper and the electrowinning of the extracted copper is well known and practiced commercially. Heretofore, however, there was no practical means to convert the copper sulfides to soluble sulfates without expending an excessive amount of energy. It was necessary either to grind the ore to liberate the copper sulfides, float to a concentrate and then roast the ore, or use an excessive amount of heat to heat the whole ore, both desired mineral and gangue, to reaction temperature.

In the conventional grinding and flotation of copper sulfide ores, a portion of the ore reports to slimes which can be finer than 10 $\mu m$ and very difficult or impossible to recover by flotation. These slimes can readily be separated by cyclones and other physical means, but the resulting sulfide concentrate is too low grade to be recovered conventionally. Because the microwaves used will selectively heat all the copper sulfides to a temperature where they will be converted by a flow of oxygen to sulfates or oxides which are water or acid soluble, the problem of fine grains of ore reporting to the slimes is eliminated and it becomes practical to recover the copper from such concentrates.

An alternative to the oxidation of copper sulfide concentrates is the chlorination of sulfide and oxide ores. Frequently, large copper sulfide ore bodies are overlain by mixed copper oxide-copper sulfide ores in which the copper is difficult to recover. Such ores, when heated with a chlorine ion donor such as ferric chloride or cupric chloride to a sufficient temperature in the absence of air, can be converted to copper chlorides which are water soluble and from which the copper can be recovered by techniques which are well known. Heretofore the expense of heating the whole rock mass was considered too great for an economic recovery of the copper. These types of ores and such oxidic ores as malachite, azurite and chrysocolla lend themselves to recovery by blending the ore with a source of chloride ion such as chlorine gas, ferrous chloride or ferric chloride, cuprous chloride or cupric chloride or mixtures thereof, and drying. The dried copper mineral and chloride ion source are then irradiated with microwaves in the absence of air, and if ferrous or cuprous chloride is used, in the presence of chlorine. The microwaves heat the copper minerals to reaction temperature, forming water soluble or brine soluble chlorides.

The reactions may be illustrated as follows:

$$3\,CuO+2FeCl_3 \rightarrow 3CuCl_2+Fe_2O_3$$
$$3\,CuO+2FeCl_2+Cl_2 \rightarrow 3CuCl_2+Fe_2O_3$$
$$CuFeS_2+3FeCl_3 \rightarrow CuCl+4FeCl_2+2S°$$
$$CuS+2FeCl_3 \rightarrow CuCl_2+2FeCl_2+S°$$

$$CuFeS_2+3CuCl_2 \rightarrow 4CuCl+FeCl_2+2S°$$
$$CuS+CuCl_2 \rightarrow 2CuCl+S°$$

Where molybdenite and rhenium sulfide occur with a silicate gangue, the microwaves selectively heat the molybdenite and rhenium sulfide to a temperature where roasting with air or oxygen produces molybdenum and rhenium oxides and sulfur dioxide. Because the microwaves are selective for the sulfides, it is not necessary to heat the entire mineral mass to roasting temperature.

The formed molybdenum and rhenium oxides are then conveniently recovered by leaching with ammonia or with caustic soda, and then treated by well known processes to precipitate molybdenum and rhenium compounds. Alternatively, the molybdenite and rhenium sulfide can be chlorinated to molybdenum and rhenium chlorides which are volatile by selectively heating them in their ores in the presence of chlorine. Again, because only the molybdenite and rhenium are heated by the microwaves, the whole gangue mass does not have to be heated. The chlorination reaction has a preferred temperature of at least about 600°C. This is readily achieved with the microwaves.

In roasting of a molybdenite concentrate the molybdenite can be brought to roasting temperature by the use of microwaves. This obviates the need for combustion of fuel to supply heat and thereby permits a more closely controlled roast and one in which the total gases produced are less. Because the microwaves pass through the transparent molybdenum oxide as it is formed and heat the molybdenum sulfide, the fact that there are oxide coatings does not inhibit the reaction and a more complete roasting can be accomplished in a shorter time. The thermal difference between the heated molybdenum sulfide and the unheated molybdenum oxide is sufficient to destroy the continuity of the oxide coating.

Inasmuch as the molybdenite and rhenium sulfide are heated internally by the microwaves, it is not necessary to grind ore so fine that the particles are liberated. It is sufficient that a surface be exposed so that the roasting conversion to molybdenum and rhenium oxides or the chlorination reaction to molybdenum and rhenium chlorides can occur. The removal of the necessity for fine grinding can greatly decrease the overall energy required for the recovery of molybdenum and rhenium.

Processes embodying the invention will now be particularly described by way of example.

The process is applicable to the treatment of sulfides or oxidic (including oxides, hydrocarbonates and silicates) minerals of copper and to treatment of sulfitic minerals of molybdenum and rhenium in the presence of oxygen or chlorine.

It is preferred that the ore or concentrate of copper be crushed so that it is readily handled in the microwave reacting unit. It is not necessary

that the ore or concentrate be finely ground. Generally, with respect to a copper ore, grinding to 1/2 inch (12.7 mm) or finer is satisfactory. It is preferred that the molybdenum and rhenium ores be ground to a size of 12 mesh (1.4 mm) or smaller so that the individual particles of molybdenite and rhenium sulfide have at least one surface exposed to the gases to be used for reaction.

It is preferred that the ore or concentrate be dried by conventional means prior to the microwave reaction. Water is an excellent absorber of microwaves and can readily be removed by microwave irradiation, but this is an expensive means of removing water and if there are substantial amounts present, it may be preferable to remove it by conventional means. However, where only a little water is present or where there is insufficient water present to justify its separate removal, it can be removed in the course of the microwave irradiation.

In a sulfation roast where copper sulfides are converted to copper sulfates, it is preferred to irradiate with microwaves for a sufficient time to heat the sulfide minerals to temperatures of between 350° and 700°C. At high temperatures there is a tendency for copper iron oxide ferrites to form which are soluble only with difficulty. Air or oxygen can be used as the source of oxygen. Generally, irradiation times of less than 15 minutes will be sufficient to raise the copper sulfide particles in the ore or concentrate to reaction temperatures, although the precise time of irradiation will depend upon the power of the microwave source and the precise nature of the gangue associated with the copper sulfide. The time must be sufficient to convert substantially all of the copper metal value to soluble compounds.

Following irradiation of the copper sulfide, the ore or concentrate may be leached with water or with acidified water to dissolve any copper oxides as well as the copper sulfate formed. The soluble copper may be recovered by solvent extraction and electrowinning.

In a chlorination reaction it is preferred to treat the ore or concentrate with a ferrous chloride solution containing sufficient ferrous chloride so that there will be at least a stoichiometric quantity of ferrous chloride which will convert to ferric chloride in the presence of chlorine gas and react with the copper minerals present. The ore or concentrate can then be dried. It is not necessary to dry completely nor to remove the water of hydration associated with the ferrous chloride. Alternatively one may use cuprous chloride and chlorine gas, although ferrous chloride is preferred. Also, alternatively, one may use ferric chloride in place of the ferrous chloride and chlorine. If ferric chloride is used, it is preferred to blend the dry ferric chloride with the dry ore prior to irradiation. The ore and reagents are then reacted by being heated by the microwave radiation. It is preferred that temperatures of the copper mineral be at least 300°C for all reactions except the sulfation roast. The mass of the gangue will of course not reach such temperatures. The time of irradiation will depend upon the power of the microwave source and the gangue minerals present, but in general will be shorter than 10 minutes.

Microwave heating can be used to selectively heat the molybdenite and rhenium sulfide to reaction temperature in the presence of chlorine to produce molybdenum and rhenium chloride and elemental sulfur. The operative temperature for this reaction is at least 300°C and at least 600°C is preferred. After chlorination, the molybdenum and rhenium chlorides can be processed by known means such as hydrogen reduction to produce the metals, or by reaction with water and ammonia or caustic to produce the oxides. The reaction time for either roasting or chlorination will depend upon the grade of the material being treated. Very low grade feeds will have a certain amount of heat loss to the surrounding gangue by conduction away from the heating molybdenum and rhenium sulfides. There will be a proportionately small heat loss from the exothermic oxidation and chlorination reactions. The sulfides in very low grade materials will generally be converted in 15 minutes, and in high grade material in 3 to 5 minutes. Because of the high speed of reaction in the microwave field, equipment size is minimal and great capital savings result.

In the roasting of molybdenite, zones of microwave energy can be advantageously used to provide additional heat to the molybdenite, which is almost completely roasted, carrying the reaction to completion. It is possible to combine the useful effects of microwave heating with conventional processes.

The following examples illustrate the process and principles employed therein.

Example 1

The following materials were all irradiated with microwave radiation of 2450 megahertz. Samples weighing 25 grams were irradiated for 6 minutes at power levels of 300 watts. Water was used as a ballast to prevent excess heating of the microwave source because of the poor absorption of some of the material. The temperature was measured as quickly as possible after irradiation.

| Material | Temperature °C after 6 minutes irradiation |
|---|---|
| Sand | 36 |
| Iron Oxide | 34 |
| Sphalerite | 34 |
| Zinc Oxide | 38 |

| Material | Temperature °C after 6 minutes irradiation |
|---|---|
| Cupric Oxide | 195 |
| Chalcopyrite | 324 |
| Bornite | >600 |
| Chalcocite | 124 |
| Chrysocolla | 108 |
| Covellite | 244 |

It is seen from the above results that zinc sulfide and the oxides of zinc and iron are not appreciably heated, while the oxides, sulfides and silicates of copper are. It is also noted that sand, which is representative of the host material for the copper minerals, is not appreciably heated.

Example 2

Twenty-five gram samples of the following materials were irradiated 6 minutes at 915 megahertz and a power level of 250 watts. Water was present as a ballast to prevent damage to the microwave source because of the poor adsorption of some of the materials. As soon as possible after irradiation the temperature of the material was measured showing the relative absorption of the microwave energy.

| Material | Temperature °C after 6 minutes irradiation |
|---|---|
| Sand | 29 |
| Iron Oxide | 28 |
| Sphalerite | 34 |
| Zinc Oxide | 29 |
| Lead Oxide | 32 |
| Cupric Oxide | 70 |
| Chalcopyrite | 58 |
| Bornite | 73 |
| Chalcocite | 42 |
| Chrysocolla | 46 |
| Covellite | 79 |

The results show that the oxides, sulfides and silicates of copper are significantly more absorbent to microwaves than sand, the oxides of iron, zinc and lead and the sulfide ore of zinc.

Example 3

A mixed copper oxide-copper sulfide ore from the oxidized zone of the large porphyry copper ore body contained 1.6 percent copper. Fifty-three percent of the copper was present as copper oxides and 47 percent of the copper was present as copper sulfides. A 113.4 gram sample of this copper ore, crushed to minus 1/2 inch (12.7 mm) but not ground, was put in a container having a flow of oxygen and subjected to 600 watts of 2450 megahertz radiation for 15 minutes. Sulfur dioxide was noted in the off-gases. The residue was leached with sulfuric acid and water at pH 1.0. Sixty-one percent of the copper was found to be soluble.

Example 4

A 120 gram sample of the ore of Example 3 was blended with 11 grams of concentrated sulfuric acid and 3 grams of iron as ferrous chloride. It was irradiated for 10 minutes with 600 watts of 2450 megahertz radiation under a chlorine atmosphere. After cooling, the reaction mass was leached with a brine solution. Eighty-six percent of the copper was soluble.

Example 5

A 94 gram sample of the ore of Example 3 was ground to minus 30 mesh (0.54 mm) and then was blended with 11 grams of concentrated sulfuric acid and 3 grams of iron as ferrous chloride, and dried. It was irradiated for 10 minutes with 600 watts of 2450 megahertz radiation. When cool it was leached for 30 minutes with a brine leach at pH 2.2. Ninety-six percent of the copper was soluble.

Example 6

Fifty grams of a mixed copper oxide-copper sulfide ore in which 85 percent of the copper is oxidic and the copper content is 0.77 percent was blended with 5.4 grams of the sulfuric acid and 3 grams of iron as ferrous chloride. The blend was dried and ground to minus 20 mesh (0.83 mm). Under a chlorine atmosphere it was reacted for 3 minutes with 600 watts 2450 megahertz radiation. It was then water leached for 1/2 hour at pH 1.9 and 90 percent of the copper was water soluble.

Example 7

One-hundred grams of a phorphyry copper ore containing 0.6 percent copper principally as chalcopyrite was ground to minus 12 mesh (1.34 mm). Under a flow of oxygen it was irradiated at 600 watts with 2450 megahertz radiation for 20 minutes. It was then leached for 30 minutes with acidified water to pH 1.0 at room temperature. Forty-two percent of the copper was water soluble.

Example 8

One hundred grams of a phorphyry copper ore containing 0.6 percent copper, principally a chalcopyrite, was ground to minus 12 mesh (1.34 mm). One gram of iron was blended as ferrous chloride. The blend was dried and under a chlorine atmosphere was irradiated for 6 minutes at 600 watts of 2450 megahertz radiation. The cooled solids were leached with a brine water solution for 30 minutes. Ninety-one percent of the copper was brine soluble.

## Example 9

Twenty-five grams of a chalcopyrite copper concentrate containing 20 percent copper was blended with 5 grams of iron as ferrous chloride and dried. A blend of inert gas and chlorine was used to chlorinate the chalcopyrite during the microwave irradiation. To prevent excessive temperatures, the irradiation was on for one minute and off for three minutes. The irradiation was on for nine minutes at 300 watts and finally two minutes at 600 watts over a time span of 40 minutes. The cooled reaction mass was leached with water with a little peroxide to oxide cuprous to cupric chloride. Ninety-six percent of the copper was dissolved.

## Example 10

The following materials were all irradiated with microwave radiation of the indicated wavelength and at power levels of 600 watts for the 2450 megahertz radiation. Water was used as a ballast to prevent over-heating of the microwave generator where the adsorption of radiation was slight. The radiation was continued for 6 minutes and then the temperature of the substance was measured as quickly as possible to determine the relative absorbence of the microwave energy.

| Substance | 2450 megahertz Temp °C |
|---|---|
| Sand | 36 |
| Iron Oxide | 34 |
| Zinc Sulfide | 34 |
| Molybdenite | 212 |
| Rhenium Sulfide | 162 |
| Molybdenum Oxide | 33 |

It is seen from the above results that molybdenum and rhenium sulfides strongly absorb microwaves, while sand, iron and molybdenum oxides and zinc sulfide do not appreciably absorb microwaves.

## Example 11

The following materials were all irradiated with microwaves of 915 megahertz and at a power level of about 280 watts for 6 minutes. Water was used as a ballast to prevent the over-heating of the generator.

| Material | Temperature Increase °C |
|---|---|
| Sand | 11 |
| Iron Oxide | 10 |
| Zinc Sulfide | 14 |
| Molybdenite | 25 |
| Rhenium Sulfide | 28 |
| Molybdenum Oxide | 11 |

As may be noted, molybdenum and rhenium sulfides are better absorbers of the radiation than the other materials tested.

## Example 12

A molybdenite mine rock waste which was too low grade for recovery of molybdenum by conventional practice, assaying 0.054 percent molybdenum, was ground to minus 14 mesh (1.19 mm). The minus 48 mesh (0.29 mm) fraction was 24.1 percent of the weight, assayed 0.094 percent molybdenum, and represented 40 percent of the molybdenum in the head sample. Fifty grams of this minus 48 mesh material was blended with 0.5 grams of iron as ferrous chloride and one gram of potassium chloride. The sample was dried. It was irradiated for six and one-half minutes with 600 watts or 2450 megahertz radiation in a chlorine atmosphere. Fifty-five percent of the molybdenum was found to be soluble in dilute acid, leaving a tailing assaying only 0.041 molybdenium.

## Example 13

A flotation reject which assayed 6 percent molybdenum was subjected to a flow of oxygen and 2450 megahert radiation for 15 minutes. The mass was allowed to cool and was leached with caustic at pH 13. Sixty-five percent of the molybdenum was found to have been roasted and to be soluble.

## Example 14

One hundred grams of a commercial molybdenite concentrate assaying 53 percent molybdenum was de-oiled by irradiating with 600 watts of 2450 megahertz radiation for 5 minutes. It was then subjected to a flow of oxygen and irradiated for 14 minutes to initiate the roasting reaction. Subsequently, the irradiation was periodically imposed in short pulses to return the unreacted molybdenite to reaction temperature as it cooled. The irradiation was on for 32 minutes over a two and one-half hour period. At the end of the roast 91 percent of the molybdenum was soluble in caustic.

## Example 15

Five grams of a commercial molybdenite concentrate containing 53 percent molybdenum was irradiated at 300 watts and 2450 megahertz for 35 minutes in a flow of chlorine. The molybdenite was chlorinated. At the end of the reaction the small residue was leached with caustic to remove soluble molybdenum which had not been volatilized. The yield of volatile and soluble molybdenum was 92 percent.

## Example 16

Five grams of a molybdenite concentrate rich in rhenium was irradiated in a flow of chlorine with 300 watts of 2450 megahertz radiation for 45 minutes. A caustic solution was used to scrub the gases leaving the reactor, and the residue was leached with caustic to pH 13.

Molybdenum recovered in soluble form was 61 percent of the total molybdenum. Rhenium extraction was 99 percent of the total rhenium.

From the above examples, it is seen that the above described process is effective for the recovery of copper, molybdenum and rhenium from their ores, including ores too poor for the recovery of metals by conventional processes.

In contrast, it has been found that the above described process is not operable for many ores in their host materials. For example, it has been found, as illustrated herein, that sphalerite and the oxide ores of zinc and iron are not appreciably heated over their host materials so that the process cannot be used to recover these metal values from these compounds in their host minerals. These examples are only illustrative of many combinations of host materials and ores upon which the process is probably not operative.

The absorption of microwave energy by a given material is a complex function which varies with frequency, and therefore response will vary over a range of frequencies and with different materials. Lower frequencies are preferred. Microwaves of different frequencies may be used at the same time, or on the same batch. Energy should be applied for a sufficient time to convert substantially all of the metal compound in the ore to the required compound in the interest of efficiency.

## Claims

1. A process for the recovery of a metal selected from copper, molybdenum and rhenium from a metal ore in which the metal is present in the form of a first compound and the remainder of the ore is less absorbent to microwaves than said first compound, said process comprising subjecting the ore to microwave energy under conditions in which the first compound can be converted to the metal or to a second compound which is more readily recoverable from the ore.

2. A process according to claim 1, wherein the ore is selected from copper oxide ore, including a hydroxy carbonate or silicate form, copper sulfide ore, molybdenum disulfide ore and rhenium sulfide ore.

3. A process according to claim 2, wherein the ore is molybdenite, chalcopyrite, bornite, chalcocite, covellite, malachite, azurite, chrysocolla, cuprite or tenorite.

4. A process according to any one of the preceding claims, wherein the first compound is a copper compound and is heated with microwaves to a temperature of at least 300°C.

5. A process according to claim 4, wherein the first compound is copper sulfide and is heated in the presence of oxygen to convert it to a sulfate or an oxide.

6. A process according to claim 5, wherein the copper sulfide is heated with microwaves to a temperature of from 350°C to 700°C to convert it to copper sulfate.

7. A process according to any one of claims 1 to 4, wherein the ore is subjected to microwaves in the presence of a source of chlorine to convert the first compound to a chloride.

8. A process according to claim 7, wherein the first compound is rhenium sulfide or molybdenum sulfide and is heated with microwaves to a temperature of at least 600°C.

9. A process according to claim 7, wherein the first compound is copper sulfide or copper oxide and is heated with microwaves to a temperature of at least 300°C.

10. A process according to any one of claims 7 to 9, wherein the source of chlorine is chlorine gas, ferrous chloride, ferric chloride, cuprous chloride, cupric chloride or mixtures thereof.

11. A process according to claim 10, wherein ferrous chloride is added to the ore and the chlorination reaction is initiated by the addition of chlorine gas to promote the formation of ferric chloride.

## Patentansprüche

1. Verfahren zum Gewinnen eines der Metalle Kupfer, Molybdän und Rhenium aus einem Metallerz, in welchem das Metall in Form einer ersten Verbindung vorliegt und der Rest der Erzes für Mikrowellen weniger absorbierend ist als die erste Verbindung, dadurch gekennzeichnet, daß das Erz der Wirkung von Mikrowellenenergie unter Bedingungen ausgestzt wird, bei welchen die erste Verbindung in das Metall oder in eine zweite Verbindung umgewandelt werden kann, welche leichter aus dem Erz gewinnbar ist.

2. Verfahren nach Anspruch 1, dadurch gekennzeichnet, daß als Erz verwendet wird Kupferoxiderz, unter Einschluß eines Hydroxycarbonats oder einer silikatischen Form, Kupfersulfiderz, Molybdändisulfiderz und Rheniumsulfiderz.

3. Verfahren nach Anspruch 2, dadurch gekennzeichnet, daß das Erz Molybdänid, Chalopyrit, Bornit, Kupferglanz, Covellit, Malachit, blauer Malachit, Chrysocollerz, Cuprit oder Tenorit ist.

4. Verfahren nach einem der vorhergehenden Patentansprüche, dadurch gekennzeichnet, daß die erste Verbindung eine Kupferverbindung ist und mit Hilfe von Mikrowellen auf eine Temperatur von wenigstens 300°C erwärmt wird.

5. Verfahren nach Anspruch 4, dadurch gekennzeichnet, daß die erste Verbindung Kupfersulfid ist und bei Anwesenheit von Sauerstoff erwärmt wird, um sie in ein Sulfat oder ein Oxid umzuwandeln.

6. Verfahren nach Anspruch 5, dadurch gekennzeichnet, daß das Kupersulfid mit Hilfe von Mikrowellen auf eine Temperatur von 350 bis 700°C erwärmt wird, um es in Kupfersulfat umzuwandeln.

7. Verfahren nach einem der Ansprüche 1 bis 4, dadurch gekennzeichnet, daß das Erz den Mikrowellen bei Vorliegen einer Chlorquelle unterworfen wird, um die erste Verbindung in ein Chlorid umzuwandeln.

8. Verfahren nach Anspruch 7, dadurch gekennzeichnet, daß die erste Verbindung Rheniumsulfid oder Molybdänsulfid ist und mit Hilfe von Mikrowellen auf einer Temperatur von wenigstens 600°C erwärmt wird.

9. Verfahren nach Anspruch 7, dadurch gekennzeichnet, daß die erste Verbindung Kupfersulfid oder Kupferoxid ist und mit Hilfe von Mikrowellen auf einer Temperatur von wenigstens 300°C erwärmt wird.

10. Verfahren nach einem der Ansprüche 7 bis 9, dadurch gekennzeichnet, daß als Chlorquelle Chlorgas, Eisen (II)-Chlorid, Eisen (III)-Chlorid, Kupfer (I)-Chlorid, Kupfer (I)-Chlorid oder Mischungen derselben verwendet werden.

11. Verfahren nach Anspruch 10, dadurch gekennzeichnet, daß Eisen (II)-Chlorid dem Erz zugesetzt wird und daß die Chlorierungsreaktion initiiert wird durch den Zusatz von Chlorgas zwecks Förderung der Bildung von Eisen (III)-Chlorid.

**Revendications**

1. Procédé d'extraction d'un métal choisi parmi le cuivre, le molybdène et le rhénium, d'un minerai métallique dans lequel le métal est présent sous forme d'un premier composé et le reste du minerai est moins absorbant des hyperfréquences que le premier composé, le procédé comprenant le traitement du minerai par l'énergie des hyperfréquences dans des conditions dans lesquelles le premier composé peut se transformer en métal ou en un second composé que peut être plus facilement extrait du minerai.

2. Procédé selon la revendication 1, dans lequel le minerai est choisi parmi le minerai d'oxyde de cuivre, y compris la forme silicate ou carbonate hydroxylé, le minerai de sulfure de cuivre, le minerai de bisulfure de molybdène et le minerai de sulfure de rhénium.

3. Procédé selon la revendication 2, dans lequel le minerai est la molybdénite, la chalcopyrite, la bornite, la chalcocite, la covellite, la malachite, l'azurite, le chrysocolle, la cuprite ou la ténorite.

4. Procédé selon l'une quelconque des revendications précédentes, dans lequel le premier composé est un composé du cuivre et est chauffé avec les hyperfréquences à une température au moins égale à 300°C.

5. Procédé selon la revendication 4, caractérisé en ce que le premier composé est le sulfure de cuivre et il est chauffé en présence d'oxygène afin qu'il se transforme en un sulfate ou un oxyde.

6. Procédé selon la revendication 5, dans lequel le sulfure de cuivre est chauffé par des hyperfréquences à une température comprise entre 350 et 700°C afin qu'il se transforme en sulfate de cuivre.

7. Procédé selon l'une quelconque des revendications 1 à 4, dans lequel le minerai est soumis à des hyperfréquences en présence d'une source de chlore afin que le premier composé se transforme en un chlorure.

8. Procédé selon la revendication 7, dans lequel le premier composé est le sulfure de rhénium ou le sulfure de molybdène et il est chauffé par les hyperfréquences à une température au moins égale à 600°C.

9. Procédé selon la revendication 7, dans lequel le premier composé est le sulfure de cuivre ou l'oxyde de cuivre et il est chauffé par les hyperfréquences à une température au moins égale à 300°C.

10. Procédé selon l'une quelconque des revendications 7 à 9, dans lequel la source de chlore est le chlore gazeux, le chlorure ferreux, le chlorure ferrique, le chlorure cuivreux, le chlorure cuivrique ou leurs mélanges.

11. Procédé selon la revendication 10, dans lequel le chlorure ferreux est ajouté au minerai et la réaction de chloruration est déclenchée par addition de chlore gazeux qui favorise la formation de chlorure ferrique.